# EUROPEAN PATENT APPLICATION

(11) **EP 1 150 225 A1**
(43) Date of publication of application: **31.10.2001**
(21) Application number: 00118678.2
(22) Date of filing: 29.08.2000
(51) Int. Cl.: G06F 17/60

(54) **Electronic commerce method and system and computer readable storage medium**

(30) Priority: 25.04.2000 JP 2000128971
(71) Applicant: Hitachi, Ltd., Chiyoda-ku, Tokyo 101-8010 (JP)
(72) Inventor: Inokuchi, Ayako c/o Hitachi, Ltd, Intell. Property, Chiyoda-ku, Tokyo 100-8220 (JP); Oyama, Hiroaki, c/o Hitachi, Ltd, Intell. Property, Chiyoda-ku, Tokyo 100-8220 (JP)
(74) Representative: Strehl Schübel-Hopf & Partner

(57) **Abstract**

In an electronic commerce system, to enable a short-term raising of funds so that deposit of money for the accounts receivable which are created as a result of electronic commerce can be prematurely accomplished. A central commerce server 1 is a computer which is connected to the computers of member entities via a network for processing the electronic commerce operation. An EDI subsystem 10 prepares the data on the purchase order and its acceptance on an EDIDB 11 in response to requests from a buyer and a seller of a commodity for assisting the transaction therebetween. As a result of this transaction, an electronic CP subsystem 20 prepares an electronic bond for the security of the accounts receivable and registers it on an electronic CPDB 21 to publicly open it to bond purchasers.

## Description

### BACKGROUND OF THE INVENTION

The present invention relates to a process and system for electronic commerce in a virtually closed space and a recording medium which records its processing program therein, and in particular to an electronic commerce method and system in which quick raising of funds by transaction parties is achieved by electronically issuing bonds for the security of the accounts receivable which are produced by electronic commerce.

With the wide spread of the internet, electronic commerce systems have been proposed and practically used in which a virtually commerce space is constructed on the Internet, so that purchase order and it acceptance transactions are made between buyers and sellers of commodities. For example, Japanese Unexamined Patent Publication JP-A-10-207956 discloses a technology in which order and its acceptance of commodities, material distribution and depositary settlement management is conducted for guaranteeing the existence of the settlement funds.

The prior art electronic commerce systems have a problem in that the credit assets such as accounts receivable which are created as a result of an electronic commerce will not be deposited in an account of the financial institution of the seller prior to the date of the settlement, so that a fund procurement is not possible in a short term.

### SUMMARY OF THE INVENTION

It is an object of the present invention to provide an electronic commerce method and system having a capability of enabling to raise funds prior to the payment for the order of a seller and a recording medium which records its processing program therein .

The present invention is characterized by an electronic commerce method and system which raises funds in a short term based upon the accounts receivable by issuing electronic bonds for hypothecating the accounts receivable which are created as a result of an electronic commerce to establish the sale and purchase transaction of these electronic bonds between the member entities. The bond transaction enables the member entities to raise funds prior to actual completion of the deposit of money from the buyer to the seller. The above-mentioned object is accomplished by an intermediate server for intermediating an electronic commerce which is connected to a computer of a seller and a computer of a bond purchaser, characterized in that said server comprises first generating means for generating the information on accounts receivable based upon the order acceptance data which is generated by the computer of the seller on the establishment of the transaction, second generating means for generating an electronic bond based upon the information on said accounts receivable, storing means for storing the association between the information on said accounts receivable and said electronic bond, presenting means for presenting said electronic bond in such a form that the purchaser of said electronic bond is able to read it, first receiving means for receiving the data on the desire of the purchase of said electronic bond which is generated by said computer of the bond purchaser (for example, names, identifiers, the number of lots) as an application for the subscription of said electronic bond, third generating means for generating the data on the bond purchasers based upon the data on the desire of the purchase, second receiving means for receiving the data on the payment representative of the execution of the payment for the consideration of said electronic bond to said seller from said bond purchaser and deposit managing means for managing the information on said accounts receivable based upon said data on the payment.

In order to accomplish the above-mentioned object, the invention may be a program which implements the above-mentioned functions or a recording medium which stores therein the same program.

### BRIEF DESCRIPTION OF THE DRAWINGS

Fig. 1 is a schematic block diagram showing the configuration of a electronic commerce system having bond dealing functions, which is an embodiment of the present invention.
Fig. 2 is a schematic diagram showing the inner configuration of a central commerce server 1 in the embodiment of the present invention.
Fig. 3 is a chart showing the procedure of the schematic operation which is associated with the hypothecation of the accounts receivable in the embodiment of the present invention.
Fig. 4 is a flow chart showing the processing which is related with the selection of each subsystem in the embodiment of the present invention.
Fig. 5 is a flow chart showing the flow of the purchase order and its acceptance processing by the EDI subsystem 10 in the embodiment of the present invention.
Fig. 6 is a flow chart showing the flow of the processing for the hypothecation of the accounts receivable and issue of the electronic bonds which is conducted by an electronic CP subsystem 20 in the embodiment of the present invention.
Fig. 7 is a flow chart showing the details of processing for determining the interest rates in the embodiment of the present invention.
Fig. 8 is a flow chart showing the flow of the processing which is related with the data on the bond purchasers, which is conducted by the electronic CP subsystem 20 in the embodiment of the present invention.
Fig. 9 is a flow chart showing the flow of processing related with management of deposit/payment related with the accounts receivable, accounts payable and the electronic bonds which is conducted by the EDI subsystem 10 in the embodiment of the present invention.
Fig. 10 is a flow chart showing the flow of processing of the bonding information management subsystem 40 in the embodiment of the present invention.
Fig. 11 is a flow chart of the flow of processing in the user table management subsystem 30 in the embodiment of the present invention.

### DESCRIPTION OF THE EMBODIMENTS

Now, embodiments of the electronic commerce system having bond dealing functions of the present invention will be described.

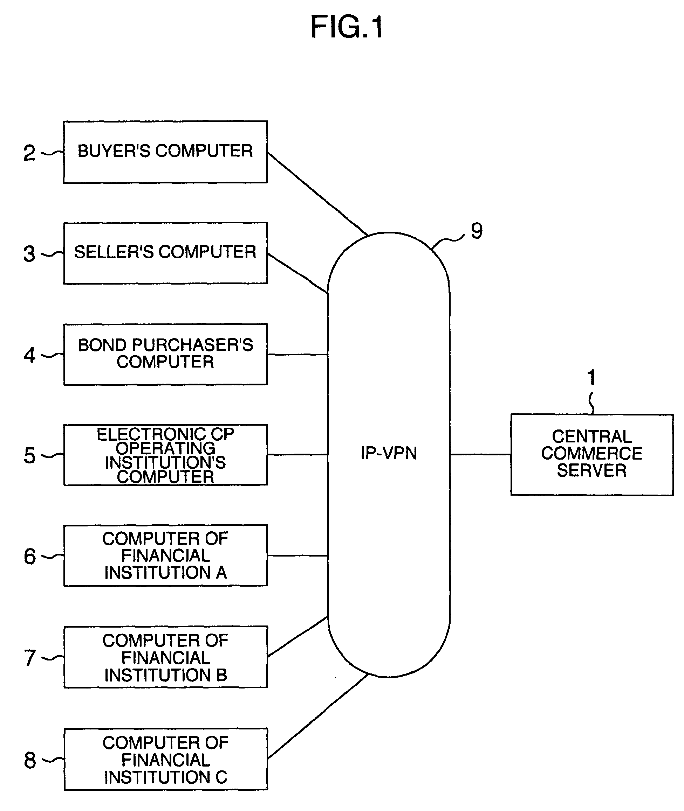

Fig. 1 is a schematic block diagram showing the electronic commerce system having bond dealing functions. As shown in the drawing, a buyer's computer 2, seller's computer 3, bond purchaser's computer 4, electronic PC (commercial Paper) managing institution's computer 5 and financial institutions' (A to C) computers 6 to 8 are user's computers and terminals, and are connected to a central commerce server 1 via an IP-VPN (Internet Protocol Based Virtual Private Network) 9. The functions of the above-mentioned various apparatus can be provided as software. For example, a program which implement each function may be written into memories via drives which are connected to each apparatus or may be transmitted to each apparatus via drives which are connected to the other computers, the other computers and a network so that they are executed by each apparatus. The buyer's computer 2 is a computer on the side of the orderer in the purchase order and its acceptance transaction. The seller's computer 3 is a computer on the side of the order acceptor in the purchase order and its acceptance transaction. The bond purchaser's computer 4 is a computer of the purchaser who purchases the electronic bond issued for the security of the accounts receivable which are created in the purchase order and its acceptance operation. The electronic CP managing institution's computer 5 is a computer of the institution which operates bond dealing, which is conducted by the central commerce sever 1. The financial institution's computers 6 to 8 have accounts of the buyers, sellers and bond purchasers and notify the associated users' computers or the central commerce server 1 of the withdrawal and from deposit to these accounts.

The central commerce server 1 is a computer which executes the processing of the operation of the electronic commerce associated with the purchase order and its acceptance and the operation of the electronic bond dealing operation in response to requests from the user's computers. IP-VPN 9 is a virtual devoted line network which is constructed on the Internet. Each of the user's computers or the central commerce server 1 is connected to the same server via a VPN router. The VPN router has an SSL (Secure Socket Layer) enabling to conduct secure communication with each users' computer and the central commerce server 1. The virtual devoted line network can be constructed without using the VPN router if the security of the communication is assured by the other security means.

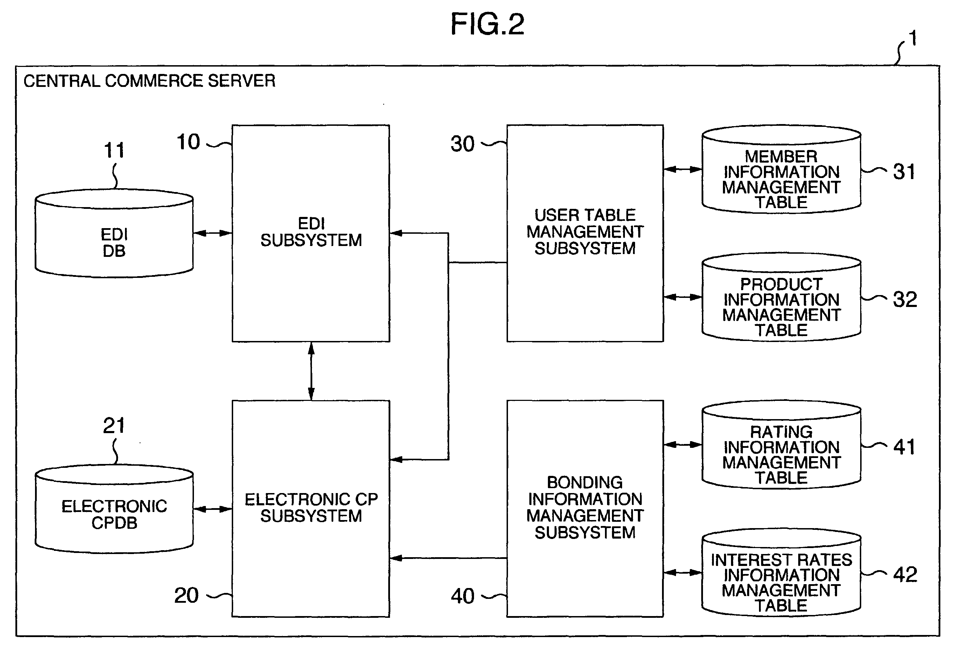

Fig. 2 is a schematic block diagram showing the inner structure of the central commerce server 1. The central commerce server 1 comprises total four subsystems including an EDI (Electronic Data Interchange) subsystem 10, electronic CP subsystem 20, user table managing subsystem 30 and bonding information managing subsystem 40.

The EDIDB (database) 11 stores order data and order acceptance data which is associated with the purchase order and its acceptance as well as information on the accounts payable which are created in association with the order data and the accounts receivable which are created in association with the order acceptance data. The EDI subsystem 10 prepares the order data, order acceptance data, information on the accounts payable and receivable and registers them in the EDIDB 11 and conducts requested processing in response to the request of reference and update on the data and information from the users. The EDI subsystem 10 also manages the payment of the accounts payable and deposition of the accounts receivable.

The electronic CPDB 21 stores in its storage the data on the electronic bonds and the purchasers of the bonds. The electronic CP subsystem 20 prepares the electronic bonds for the hypothecation of the accounts receivable based upon the information on the accounts receivable which was prepared by the EDI subsystem 10 and responds to the reference request related with the electronic bonds from the users. The electronic CPDB 21 also prepares the data on the bond purchasers relating to the electronic bonds for managing the status on the payment by the bond purchasers and deposit of money from the sellers of the bonds.

A member information managing table 31 stores the information on the members of this system, including the buyers, sellers, bond purchasers, electronic CP managing institutions and member financial institutions. A product information control table 32 stores therein the information on the products which are produced by the members. The user table managing subsystem 30 manages the member information managing table 31 and the product information managing table 32 and responds to the requests such as data registration, reference, update and deletion from the users.

A rating information managing table 41 stores the information on rating of the buyer and seller members, which is disclosed by civil rating institutions and the like. An interest rates information managing table 42 stores information on the interest rates which are determined by the financial institutions and financial markets. A bonding information managing subsystem 40 manages the ranking information managing table 41 and the interest rates information managing table 42 and responds the requests such as data registration, reference, update and deletion from the electronic CP operating institution.

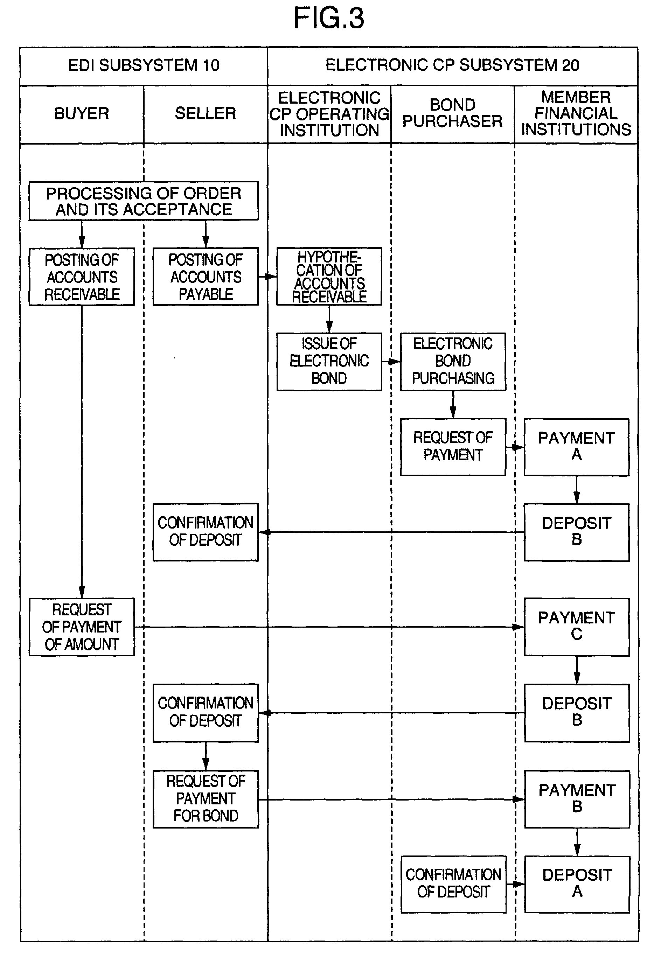

Fig. 3 shows a procedure of a series of summary operation from the commencement of the order and its acceptance processing to the completion of receipt of all cash. EDI subsystem 10 processes the order and its acceptance based upon the input of order and its acceptance from the seller. As a result of this processing, the accounts payable and receivable are posted on the sides of buyer and seller, respectively, so that the information on the accounts payable and receivable is created. The electronic CP subsystem 20 issues and electronic bonds for the hypothecation of the accounts receivable. If the bond purchaser purchases this bond, the electronic CP subsystem 20 generates the data on the bond purchaser in association with issued electronic bonds. The bond purchaser requests the designated financial institution A which joins the virtual commerce space to conduct the payment to the seller. In response to this request of payment, the designated financial institution A conducts the payment to a financial institution B which is designated by the seller. In response to the remittance to the financial institution B from the financial institution A, the seller confirms received cash for the issued bonds. The EDI subsystem 10 brings the information on the accounts receivable into a state representing that the cash was received from the bond purchaser.

On the other hand, the buyer requests the designated financial institution C to pay the accounts payable posted by the order and its acceptance processing. On receipt of this payment request, the financial institution C conducts the remittance to the financial institution B which is designated by the seller. On receipt of the cash on the financial institution B from the financial institution C, the seller confirms the received cash in the purchase order and its acceptance. The EDI subsystem 10 brings information on the accounts receivable into a state representing that the cash was received from the buyer. The receipt of the cash causes the seller to request the designated financial institution B to conduct the payment for the bond to the designated financial institution A of the bond purchaser. In response to the payment request, the financial institution B conducts the remittance to the financial institution A which is designated by the bond purchaser. In response to the cash receipt of the financial institution A from the financial institution B, the bond purchaser confirms the received cash on the bond transaction. The electronic CP subsystem 20 brings the data on the bond purchaser into a state representing that the cash was received. Thus, a series of commerce operation is completed.

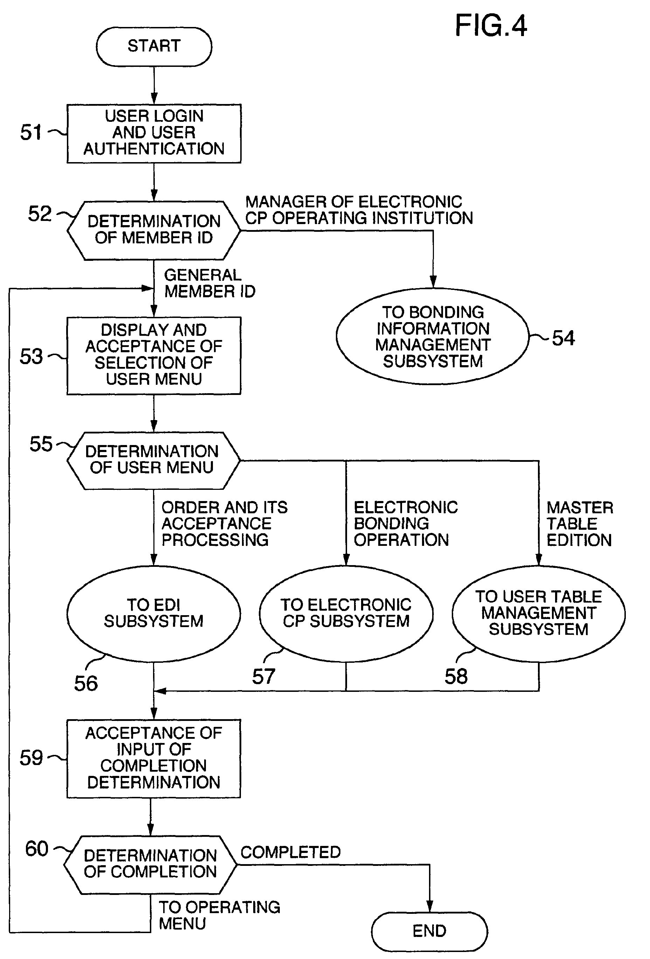

Fig. 4 is a flow chart showing the flow of processing relating to the selection of each subsystem of the central commerce server 1. The central commerce server 1 accepts the user login from various computers which are connected to IP-VPN 9 for the user authentication with reference to the member information management table 31 (step 51). The user authentication may be conducted by using electronic certificate, pass word and the like, which are known technology.

If the member ID is a general member ID such as seller, a user menu is displayed so that an input for menu selection from the user is accepted via the IP-VPN 9 (step 53). If the member ID is an ID of the electronic CP managing institution, the operation sequence will proceed to the operation of the hypothecating information managing subsystem 40 (step 54).

If the user menu is selected, determination of the user menu is conducted (step 55). If the user manu which is selected by the general member is the purchase order and its acceptance processing, the operation sequence will proceed to the EDI subsystem (step 56). If the user menu which is selected by the general member is the electronic hypothecating operation, the operation sequence will proceed to the operation of the electronic CP subsystem 20 (step 57). If the user manu which is selected by the general member is a master table editing, the operation sequence will proceed to the operation of the user table managing subsystem 30 (step 58).

When the operation of the subsystem for each user is completed, a completion determination input relating to the service for user is accepted from the general user's computer (step 59). If the user selects the continuation of the operation, the operation sequence will proceed to a user menu selection acceptance (step 53). If the completion is selected, the operation of the central commerce server 1 is completed (step 60).

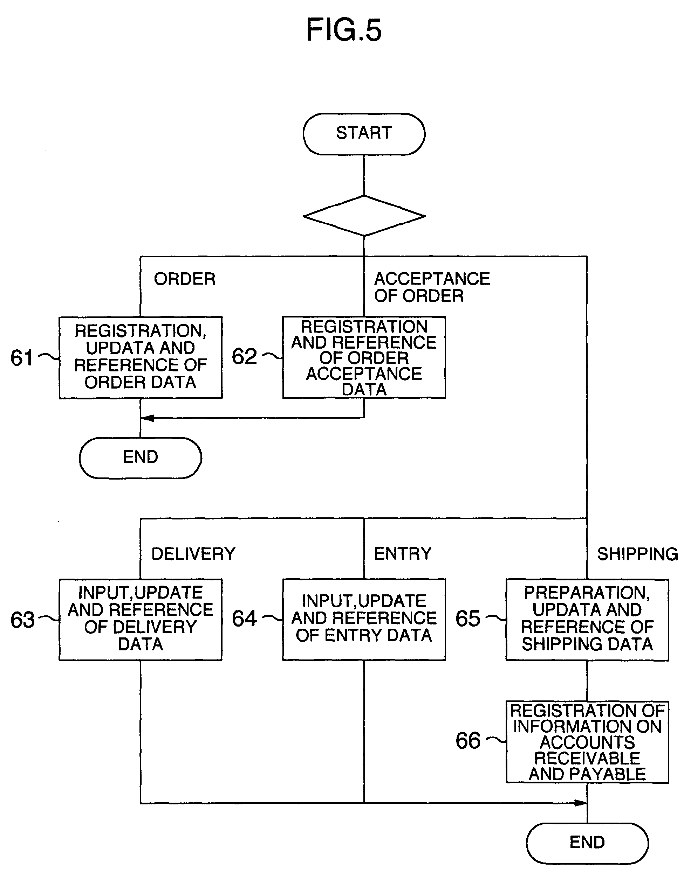

Fig. 5 is a flow chart showing the flow of an order and its acceptance processing operation which is conducted by the EDI subsystem 10. If the EDI receives a request of an order from the buyer's computer 2, it accepts an input of the order data, numbers the order and registers the input order data in the EDIDB 11 (step 61). The order data includes the information such as order number, buyers member ID, product ID, quantity, amount and delivery date. Subsequently, in response to the request of reference and update of the order data made by the buyer's computer 2, reference and update operation of the order data in interest is conducted. On receipt of order processing by the buyer's computer 2, the EDI subsystem 10 informs the seller's computer 3 of the acceptance of the order and numbers the order acceptance, prepares the order acceptance data and registers them in EDIDB 11 (step 62). The order acceptance data includes information such as order acceptance number, order acceptance number of the corresponding order data, seller's member ID, product ID, quantity, amount and delivery date. Subsequently, in response to a request of reference of the order acceptance data made by the seller's computer 3, the reference of the order acceptance data is conducted. In response to a request of the reference from the buyer's computer 2, reference of the order acceptance data having the same order number is also conducted.

If the seller's computer 3 informs of the delivery of the product, an input of the delivery data is accepted and the input delivery data is registered in the EDIDB 11 (step 63). The delivery data includes information such as order acceptance number, seller's number ID, product ID, quantity, etc.

Subsequently, the EDI subsystem 10 responds a request of reference and update of the delivery data which is made by the seller's computer 3 and the request of reference of the delivery data which is made by related buyer's computer 2. If the seller's computer 2 notifies the entry of the product into storage, an input of the entry of the product into the storage is accepted and the input data on the entry of the product into the storage is registered in EDIDB 11 (step 64). The data on the entry of the product into the storage includes information such as the order number, buyer's member ID, product ID, quantity, amount, etc. The EDI subsystem 10 responds the request of reference and update of the data on the entry of the products into the storage which is made by the buyer's computer 2 and the request of reference of the data on the entry of the product into the storage, which is made by the seller's computer 3. In response to the processing of the data on the entry of the product into the storage, which is conducted by the buyers computer 2, EDI subsystem 10 prepares the data on the shipping of the product from the storage and registers the data on the shipping of the product from the storage in EDIDB 11 (step 65). The data of the shipping on the product from the storage includes information such as order acceptance number, seller's member ID, product ID, quantity, amount, etc. The EDI subsystem also responds the request of the reference and update of the data on the shipping of the product from the storage which is made by the seller's computer 3.

Subsequently, in order to post the accounts receivable and the accounts payable, the EDI subsystem 10 prepares the information on the accounts receivable and the accounts payable and registers it in the EDIDB 11 (step 66).

The information of the accounts receivable includes information such as the order acceptance number, seller's member ID, buyer's member ID, quantity, flag representative of the receipt of cash from buyer, flag representative of the hypothecation, flag representative of receipt of cash from bond purchaser, and flag representative of the payment to bond purchaser. The information on the accounts payable includes information order number, relevant order acceptance number, buyer's member ID, seller's member ID, quantity, payment due date, flag representative of the payment of cash to the seller.

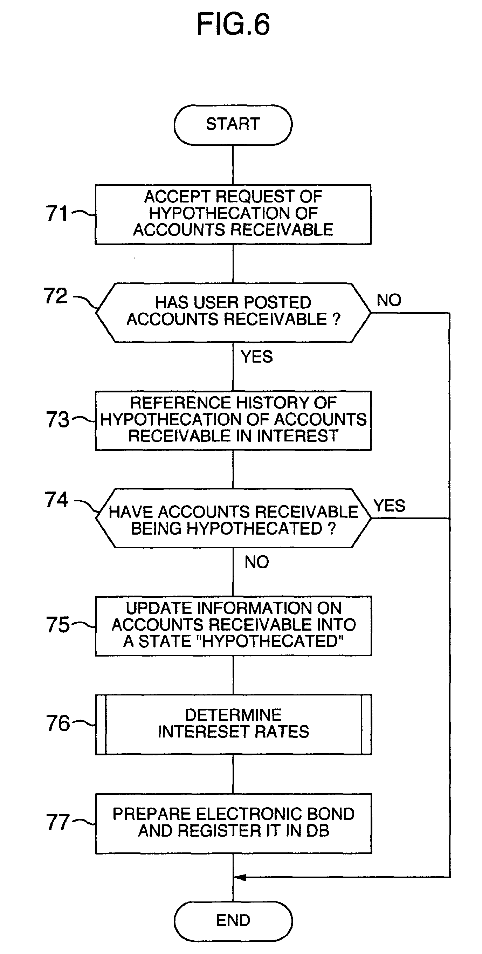

Fig. 6 is a flow chart showing the processing of the hypothecation of the accounts receivable and the issue of the electronic bonds which is conducted by the electronic CP subsystem 20. When the electronic CP subsystem 20 receives a request of the hypothecation of the accounts receivable from the seller's computer 3 (step 71), the electronic CP subsystem 20 inquires the EDI subsystem 10 as to the received order acceptance number, the amount and the member ID for determining whether or not the user has posted the accounts receivable (step 72). If the accounts receivable have been posted, the electronic CP subsystem 20 determines with reference to the flag representative of the hypothecation of the information on the accounts receivable whether or not the accounts receivable has been hypothecated (step 74). If not hypothecated (NO at step 74) , the electronic CP subsystem 20 updates the hypothecation flag representative of the information on the accounts receivable through the EDI subsystem 10 (step 75). This prevents rehypothecation of the same accounts receivable. Subsequently, the subsystem 20 determines the interest rates of the relevant electronic bonds (step 76), prepares the electronic bonds and registers them in the electronic CPDB 21 (step 77). The electronic bond includes information such as bond number, seller's member ID, order acceptance number, the amount, the determined interest rates, the payment due data of the bond purchaser, the ownership information of the bonds. The thus issued electronic bonds will be opened on the electronic CP market, so that the bond purchaser who is a member will be able to read it.

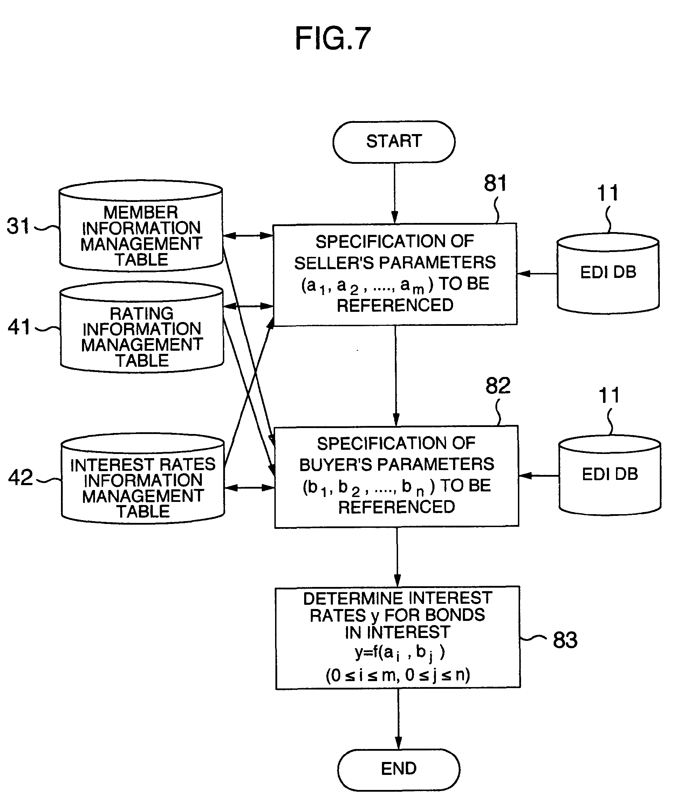

Fig. 7 is a flow chart showing in a developed form the processing for determining the interest rates at step 76. The electronic CP subsystem 20 references the member information management table 31, rating information management table 41, interest rates information management table 42 and EDIDB 11 based upon the member ID of the seller to obtain parameters a₁ to aₘ which are necessary for determining the interest rates, such as the civil rating, seller's management information, the history of transaction and the payment status (step 81). Similarly, the subsystem 20 references the member information management table 31, rating information management table 41, interest rates information management table 42 and the EDIDB 11 based upon the member ID of the buyer to obtain parameters b₁ to bₙ which are necessary for determining the interest rates, such as the civil rating, information on the buyer's management, the history of transaction and the payment status (step 82). Subsequently, the subsystem 20 determines the interest rates y of the relevant electronic bonds, which is determined by an interest rates determining function f based upon the sellers parameters a₁ to aₘ and the buyers parameters b₁ to bₙ which have been obtained (step 83).

The above-mentioned interest rates determining scheme makes it possible to issue the bonds which are added with creditworthiness which is higher in credibility than that of prior art since both seller's and the buyer's parameters are considered.

It is assumed that the parameters of the seller are AAA-rated and the parameter of the buyer are B+ rated. Since only the rating of the seller in the purchase order and its acceptance, who is the publisher is reflected in the rating of the bond in the prior art, A-1 which is the highest rating of the short-term bond is applied. In the prior art, there is a problem in that the risk to make credit of the same buyer which is a substantial debtor is not reflected in the rating of the bond. However, in accordance with the present invention, the quasi-highest rating A-2 in the short-term bond including the rating of the sellers parameters as well as risk of the rating of the parameters of the seller is applied to the bond rating so that higher interest rates are preset. Issue of the bonds which are added with practically higher creditworthiness than that in prior art is made possible by generally reflecting the fund ability of both creditor and debtor in the purchase order and its acceptance transaction in the bond rating.

In contrast to this, it is assumed that the parameters of the seller are b+-rated and the parameters of the buyer are AAA- rated, B which is the short-term bond rating representative of a higher speculation factor is applied since only rating of the seller in the purchase order and its acceptance transaction, which is a bond issuer is reflected in the bond rating in the prior art. In this case, there is a problem in that the higher credibility of the same buyer which is a substantially debtor can not be reflected in the bond rating. However, in accordance with the present invention, the rating of the parameters of the seller as well as the higher creditworthiness of the parameters of the buyer is reflected in the bond rating and A-3 which is a short-term bond rating higher than the bond rating B which is applied in the prior art by one step is applied to suppress the interest rates lower. This generally reflects the fund ability of both debtor and creditor in the order and its acceptance transaction in the rating so that practically higher creditworthiness which reflects the actual situation at a higher fidelity can be added than the prior art.

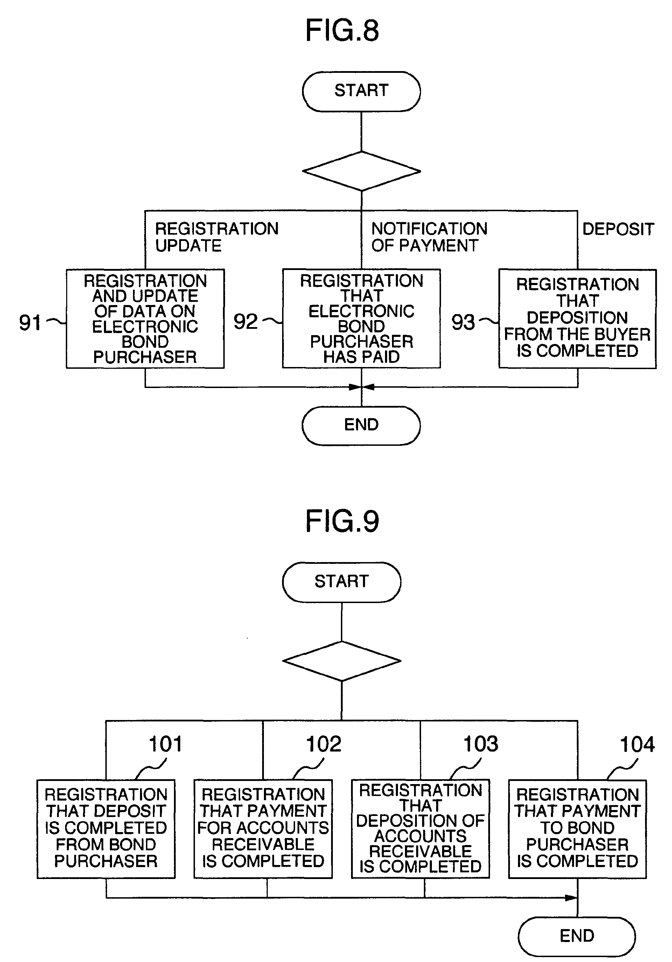

Fig. 8 is a flow chart showing the flow of the processing relating to the management of the data on the bond purchasers which is conducted by the electronic CP subsystem 20. The electronic CP subsystem 20 conducts the processing for the reference of the electronic bonds in response to a request of reference of the opened electronic bonds from the bond purchaser's computer 4. When there is an application for subscription to the electronic bonds from the bond purchaser's computer 4, the data on the bond purchaser is prepared and is registered in the electronic CPDB 21 (step 91).

The data on the bonding purchasers includes information such as the bond number, the member ID of the bonding purchaser, the amount to be received, a flag representative of whether or not the payment is completed, a flag representative of whether or not the deposit from the seller is completed or not. The amount to be received includes the accounts receivable in interest plus the amount corresponding to the interest rates. The bonding purchasers are selected by the electronic CP operating institution. In response to the notification of the determination of the bonding purchasers from the electronic CP operating institution's computer 5, the data on the selected bonding purchasers is brought into a state "determined" and a notification of determination is transmitted to the computer 4 of the selected bonding purchasers . The information on the ownership of the electronic bonds in interest in the electronic CPDB 21 is updated to the member ID of the bonding purchasers in interest.

When the payment is conducted by the bonding purchaser in interest and the electronic CP subsystem 20 received a notification of the payment from the member financial institution, the electronic CP subsystem 20 retrieves the data on the bonding purchasers in the electronic CPDB 21 based upon the received bond numbers and a member ID of the bond purchaser and updates the flag representative of whether or not the payment is completed in the data on the bonding purchaser in interest into a state "payed" (step 92). At this time, the electronic CP subsystem 20 checks for the agreement between the amount of the electronic bond having the same bond number in the electronic CPDB 21 and the received amount. After the bond purchaser confirms the deposit of the cash from the seller, he or she registers that the cash has been deposited in the central commerce server 1. When the electronic CP subsystem 20 receives a request of registration of a state "deposited" from the bond purchaser's computer 4, it retrieves the date on the bond purchaser in the electronic CPDB 21 based upon the received bond number, member ID of the bond purchaser and the amount and updates a flag representative of whether or not the deposit is completed in the data on the corresponding bond purchaser into a state "deposited" (step 93). Alternatively, processing may be conducted in response to a notification of the cash deposit from the member financial institution in lieu of the request of the registration of a flag representing that the cash has been deposited from the computer 4 of the bond purchaser.

Fig. 9 is a flow chart showing the flow of processing of the deposit/payment relating to the accounts receivable, accounts payable and electronic bonds, which is conducted by the EDI subsystem 10. After the seller confirms the deposit of cash from the bond purchaser, he or she registers that the cash has been deposited in the central commerce server 1. The EDI subsystem 10 receives a request of the registration that the cash has been deposited from the seller's computer 3, it retrieves the information on the accounts receivable in the EDIDB 11 based upon the received order acceptance number, member ID of the seller and the amount and updates the flag representative whether or not the deposit is completed into a state "deposited" from the bond purchaser in the information on the accounts receivable in interest (step 101). Subsequently, when the payment is conducted by the buyer and the EDI subsystem 10 receives a notification of the payment from the member financial institution, the EDI subsystem 10 retrieves the information on the accounts receivable in the EDIDB 11 based upon the received order number, corresponding order acceptance number, the member ID of the buyer and the amount and updates the flag representative of whether or not the payment to the seller is completed in the information on the corresponding accounts receivable into a state "paid" (step 102). When the EDI subsystem 10 receives a request of the registration that the accounts receivable have been deposited from the seller's computer 3, it retrieves the information on the accounts receivable in the EDIDB 11 based upon the received order acceptance number, the member ID of the seller and the amount and updates the flag representative of that the deposit from the buyer is completed in the information on the corresponding accounts receivable into a state "deposited" (step 103). Subsequently, when the payment to the bond purchaser from the seller is conducted and the EDI subsystem 10 receives a notification of the payment from the member financial institution, the EDI subsystem 10 retrieves the information on the accounts receivable in the EDIDB 11 based upon the received order acceptance number and the member ID of the seller and updates the flag representative of whether or not the payment to the bond purchaser is completed in the information on the corresponding accounts receivable into a state "paid" (step 104). At this time, the EDI subsystem 10 retrieves the data on the relevant electronic bonds and corresponding bond purchaser in the electronic CPDB 21 via the electronic CP subsystem 20 and checks for the agreement between the received amount in the relevant bond purchaser data and the received amount. Alternatively, processing may be conducted in response to a deposit notification from the member financial institution in lieu of the request of the registration that the cash has been from the seller's computer 3 at steps 101 and 103.

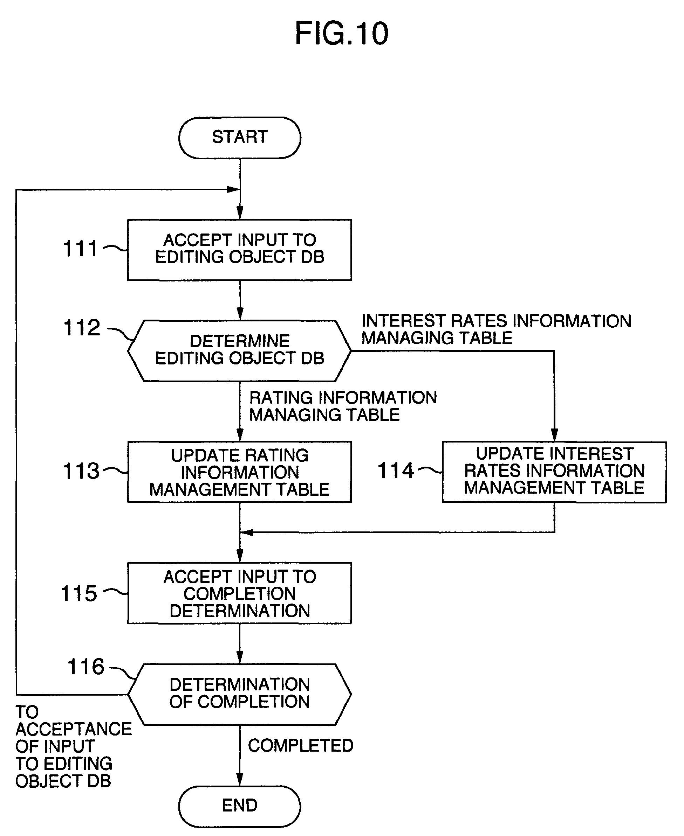

Fig. 10 is a flow chart showing the flow of the processing in the bonding information management subsystem 40. The bonding information management subsystem 40 accepts an input of the selection of an editing object DB from a computer 5 of a manager of the electronic CP operating institution via the IP-VPN 9 (step 111). If the editing object DB is the rating information management table 41, the subsystem 40 accepts an input of the rating information of each user entity, which is appropriately disclosed by the civil rating institutions, financial institutions, etc. and updates the rating information management table 41 based upon the processing which is selected by the manager, such as novel registration, update, inquiry and deletion (step 113). The electronic CP operating institution regularly updates the rating information management table 41 based upon the rating information of each relevant user entity which is appropriately disclosed by the civil rating institutions, the financial institutions, etc. for constantly managing the rating information in which the update trends are reflected.

If the editing object DB is the interest rates information management table 42, the electronic CP operating institution accepts as detailed information of each user entity, inputs of definition of detailed information relating to interest rates such as prime rate, interest rates in the various short-term financial markets, such as draft exchange market and call market and FF interest rates, the interest rates of merchandise which is sold by the financial institutions, etc., and updates the interest rates information management table 42 based upon the processing which is selected by the manager, such as novel registration, update, inquiry and deletion (step 114).

Subsequently, an input of determination of the compression from the electronic CP operation institution's computer 5 is accepted (step 115). When continuation of processing is selected, the operation sequence will proceed to the acceptance of the input of the editing object DB (step 111). When the completion of the processing is selected, processing of the bonding information management system 40 is terminated and the operation sequence will proceed to the acceptance of an input of the determination of the completion of the central commerce server 1 (step 59). Although the processing shown in Fig. 10 is the on-line transaction processing, it may be automatic processing such as uploading of the update data file which is transmitted from the financial institution, etc.

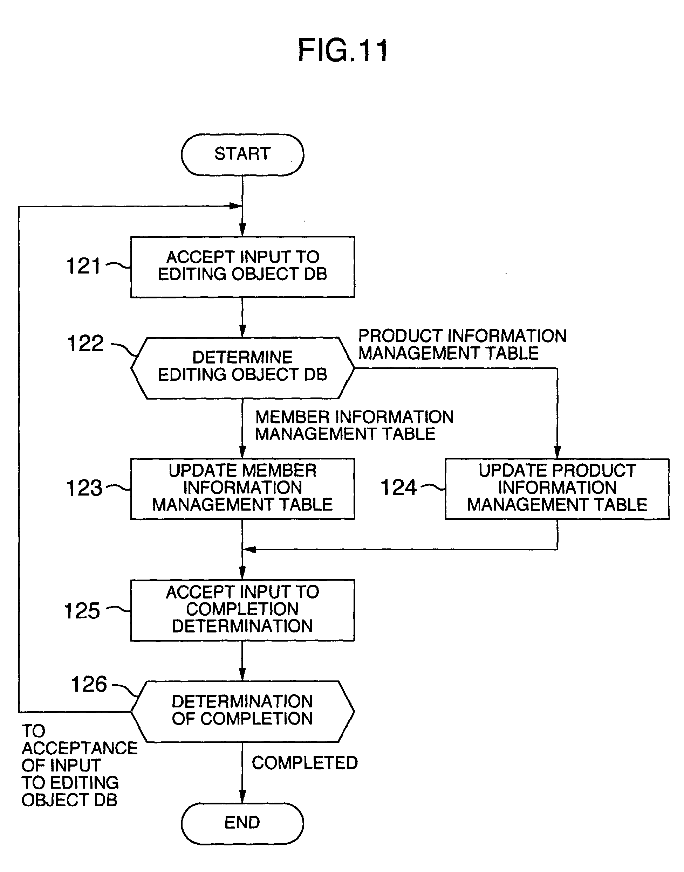

Fig. 11 is a flow chart showing the flow of the processing of the user table management subsystem 30. The user table management subsystem 30 accepts an input of selection of the editing object DB of the computers of the general members via the IP-VPN 9 (step 121). If the editing object DB is the member information management table 31, the subsystem 30 accepts as detailed information of each user entity, an input of information such as entity name, its address, the board of directors, management information and the fields of divisions and updates the member information management table 31 based upon the processing which is selected by the relevant user, such as novel registration, update, inquiry and deletion (step 123).

If the editing object DB is a product information management table 32, the user table management system 30 accepts as product information of each user entity, an input of definition of the detailed information such as product names, product codes and product fields, and updates the product information management table 32 based upon the processing which is selected by the relevant user, such as novel registration, update, inquiry and deletion (step 124).

Subsequently, the user table management system 30 accepts an input of the determination of the completion from the computers of the general users (step 125). If the continuation processing is selected, the operation sequence will proceed to the acceptance of the input of the editing object DB (step 121). If the processing compression is selected, the processing of the user table management system 30 is terminated and the operation sequence will proceed to the acceptance of an input of the determination of the completion of the central commerce server 1 (step 59).

As mentioned above, in accordance with the present invention, member users which joins in the electronic commerce system is capable of issuing electronic bonds for the hypothecation of the accounts receivable which are created as a result of electronic commerce, so that quick and short-term raising of funds can be achieved by trading of the same electronic bonds .

## Claims

1. An electronic commerce method for processing a purchase order and its acceptance having bond dealing functions, **characterized in that** said method comprises the steps of: preparing the information on the accounts receivable which are created as a result of processing of said purchase order and its acceptance to store it in a storage (11) , preparing an electronic bond for the hypothecation of said accounts receivable to store it in a storage (21) in such a manner that its bond buyer able to read it.

2. An electronic commerce method having bond dealing functions as defined in Claim 1, **characterized in that** when said electronic bond is prepared, the information on said accounts receivable is preset to a state representative of that they have been hypothecated to prevent the same accounts receivable from being rehypothecated.

3. An electronic commerce method having bond dealing functions as defined in Claim 1, **characterized in that** the interest rates of said electronic bond are determined based upon the information of ratings of both the seller who has posted said accounts receivable and the buyer who has posted relevant accounts payable.

4. An electronic commerce method having bond dealing functions as defined in Claim 1, **characterized in that** when said bond buyer pays for the amount of said purchased electronic bond, the information on said bond purchaser is preset to a state representative of that the amount of said electronic bond has been paid and when the seller who has posted said accounts receivable receives the money, the information on said bond purchaser is preset to a state representative of "money received".

5. An electronic commerce method having bond dealing functions as defined in Claim 1, **characterized in that** when the seller who has posted said accounts receivable receives the money due to the payment of said bond purchaser, the information on said accounts receivable is preset to a state representative of that the bond purchaser has deposited money and when the relevant buyer deposits money to said seller, the information on said accounts receivable is preset to a state representative of that the buyer has deposited money.

6. An electronic commerce system having bond dealing functions, **characterized in that** said system comprises means (10) for processing the purchase order and its acceptance, means (10) for preparing information on the accounts receivable which are created as a result of the processing of said purchase order and its acceptance to store the information in a storage (11), and means (20) for preparing an electronic bond for the hypothecation of said accounts receivable to store it in a storage (21) so that a bond purchaser is able to read it.

7. An electronic commerce system having bond dealing functions as defined in Claim 6, **characterized in that** said system further comprises means (30) for presetting the information on said accounts receivable to a state representative of that said accounts receivable have been hypothecated and means (40) for checking for whether or not the same accounts receivable have been rehypothecated.

8. An electronic commerce system having bond dealing functions as defined in Claim 6, **characterized in that** said system further comprises means (41) for determining the interest rates of the bond based upon the information of the rating of both the seller who has posted said accosts receivable and the seller who has posted relevant accounts payable.

9. An electronic commerce system having bond dealing functions as defined in Claim 6, **characterized in that** said system further comprises means for generating information for managing the payment of a bond purchaser who is determined corresponding to said electronic bond.

10. An electronic commerce system having bond dealing functions including a first computer of a buyer (2) , a second computer of a seller (3), a third computer of a bond purchaser (4) and a server computer (1) , which are connected to said first, second and third computers (2, 3, 4) via a network (9), **characterized in that** said server computer (1) comprises means for assisting a purchase order and its acceptance transaction so that it is established between the order data which is sent from said first computer (2) and the order acceptance data which is sent from said second computer (3) , means (10) for preparing the information on the accounts receivable which are created as a result of said purchase order and its acceptance transaction to store it in a storage (11) and means (20) for preparing an electronic bond for the security of said accounts receivable to store it in a storage (21) so that a bond purchaser is able to read it.

11. An intermediate server for intermediating electronic commerce which is connected to a computer of a seller (3) and a computer of a bond purchaser (4), **characterized in that** said server comprises first generating means (10) for generating the information on accounts receivable based upon the order acceptance data which is generated by the computer of the seller on the establishment of the transaction, second generating means (20) for generating an electronic bond based upon the information on said accounts receivable, storing means (11) for storing the association between the information on said accounts receivable and said electronic bond, presenting means for presenting said electronic bond in such a form that the purchaser of said electronic bond is able to read it, first receiving means for receiving the data on the desire of the purchase of said electronic bond which is generated by said computer (4) of the bond purchaser as an application for the subscription of said electronic bond, third generating means for generating the data on the bond purchasers based upon the data on the desire of the purchase, second receiving means for receiving the data on the payment representative of the execution of the payment for the consideration of said electronic bond to said seller from said bond purchaser and deposit managing means for managing the information on said accounts receivable based upon said data on the payment.

12. A computer readable recording medium which stores therein a program for implementing a process as defined in Claim 1.
